Europäisches Patentamt

(19) European Patent Office

Office européen des brevets

(11) Veröffentlichungsnummer: **0 111 970**
**B1**

(12) **EUROPÄISCHE PATENTSCHRIFT**

(45) Veröffentlichungstag der Patentschrift:
08.04.87

(51) Int. Cl.⁴: **H 04 Q 7/04, H 04 B 7/26**

(21) Anmeldenummer: **83201765.1**

(22) Anmeldetag: **14.12.83**

(54) **Verfahren und Steuereinrichtung zur Verteilung der Verkehrsmenge auf verschiedene Organisationskanäle eines Funkübertragungssystems.**

(30) Priorität: **17.12.82 DE 3246743**

(43) Veröffentlichungstag der Anmeldung:
**27.06.84 Patentblatt 84/26**

(45) Bekanntmachung des Hinweises auf die Patenterteilung:
**08.04.87 Patentblatt 87/15**

(84) Benannte Vertragsstaaten:
**AT BE CH DE FR GB IT LI NL SE**

(56) Entgegenhaltungen:
**EP-A-0 036 146**
**DE-B-2 733 503**

(73) Patentinhaber: **Philips Kommunikations Industrie AG, Thurn- und- Taxis- Strasse 10, D-8500 Nürnberg 10 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten:
**BE CH FR GB IT LI NL SE AT**

(72) Erfinder: **Grauel, Christoph, Dr. Ing., Andreas- Schramm- Strasse 14, D-8501 Feucht (DE)**
Erfinder: **Duplessis, Philippe, 10 Rue Latecoere, F-78141 Velizy Cedex (FR)**
Erfinder: **Tarabout, Alain, 10 Rue Latecoere, F-78141 Velizy Cedex (FR)**

(74) Vertreter: **Peuckert, Hermann, Philips Patentverwaltung GmbH Billstrasse 80 Postfach 10 51 49, D-2000 Hamburg 28 (DE)**

## Beschreibung

Die Erfindung betrifft ein Verfahren und eine Steuereinrichtung zur Verteilung der Verkehrsmenge auf verschiedene Organisationskanäle eines Funkübertragungssystems gemäß den Oberbegriffen der Ansprüche 1 und 11.

Bei einem aus der DE-AS 27 33 503 bekannten Nachrichten-Funksystem (Funkübertragungssystem) ist der Dienstbereich (das gesamte Versorgungsgebiet) in eine Vielzahl von Zonen (Funkzonen) eingeteilt (Zellularsystem) und jeder Funkzone sind mindestens ein Steuerkanal (Organisationskanal) und mehrere Sprechkanäle zugeordnet. In einer Funkzone mit einer großen Anzahl von beweglichen Fernsprechteilnehmern (beweglichen Funkstationen) ist es notwendig, in der beweglichen Funkstation (ortsfeste Funkstation) für mehrere Organisationskanäle je einen Sender/Empfänger vorzusehen. Um den Aufwand für die Sende- und Empfangstrennfilter zu verringern, sind das Sende- und Empfangsfrequenzband in jeweils ein oberes und ein unteres Band aufgeteilt. Die in mindestens zwei Gruppen (Teilmengen) eingeteilten beweglichen Funkstationen benutzen jeweils ein Band des Sende- und Empfangsfreguenzbandes. Die Aufteilung von Sende- und Empfangsfrequenzband in jeweils zwei Bänder ist so gewählt, daß beide Teilmengen yon beweglichen Funkstationen ein gemeinsames Band aufweisen. In diesem gemeinsamen Band sind zumindest die Organisationskanäle angeordnet.

Eine bewegliche Funkstation einer ersten Teilmenge wählt z.B. zum Verbindungsaufbau einen Organisationskanal aus. Dazu sucht die bewegliche Funkstation die der Teilmenge zugeordneten Organisationskanäle nach einem Organisationskanal mit gutem Signal/Geräusch-Verhältnis ab. Verschlechtert sich durch Störungen der Funkfeldausbreitung oder durch andere Ursachen das Signal/Geräusch-Verhältnis des ausgewählten Organisationskanals, so kann die bewegliche Funkstation, bei Empfang einer bestimmten Markierung eines Organisationskanals, auch einen Organisationskanal einer anderen Teilmenge, z.B. der zweiten Teilmenge, benutzen. Diese Zuordnung von Organisatiönskanälen einer anderen Teilmenge wird in einer Funkzone dann vorgenommen, wenn diese eine geringe Anzahl yon beweglichen Funkstationen aufweist.

Sind in einer Funkzone mehrere Organisationskanäle vorgesehen, so ist die Verkehrsmenge, entsprechend der in dieser Funkzone befindlichen und eingebuchten beweglichen Funkstation, auf die Organisationskanäle dieser Funkzone verteilt. Beim bekannten Funkübertragungssystem (DE-AS 27 33 503) wird zur Verringerung des Aufwandes für die Sende- und Empfangstrennfilter eine Einteilung der beweglichen Funkstationen in Teilmengen vorgenommen. Eine Berücksichtigung der Verkehrssituation, insbesondere eine Steuerung durch Verteilung der Verkehrsmenge auf verschiedene Organisationskanäle ist nicht vorgesehen oder erwähnt. Sind einer Funkzone beispielsweise vier Organisationskanäle zugeordnet und befinden sich in der Funkzone von vier Teilmengen von beweglichen Funkstationen dort nur zwei Teilmengen, so verteilt sich die Verkehrsmenge auf jeweils zwei den beiden Teilmengen zugeordneten Organisationskanäle.

Wird in einer Funkzone die Anzahl der dieser Funkzone zugehörigen Organisationskanäle oder die Frequenz und damit die Kanalnummer eines Organisationskanals verändert, so sollen sich die beweglichen Funkstationen selbstständig und automatisch auf den dadurch gebildeten neuen Satz von Organisationskanälen verteilen. Wird beispielsweise der Funkzone ein neuer Organisationskanal zugeteilt, so soll möglichst verhindert werden, daß die bereits vorhandenen Organisationskanäle sowie der neue Organisationskanal kurzfristig durch eine Vielzahl von einzelnen Umbuchungen von beweglichen Funkstationen momentan überlastet werden.

Der Erfindung liegt die Aufgabe zugrunde, ein Verfahren und eine Steuereinrichtung zur Verteilung der Verkehrsmenge auf verschiedene Organisationskanäle einer Funkzone anzugeben. Bei Umkonfiguration, d.h. bei Ausfall eines Organisationskanals, sollen für die beweglichen Funkstationen keine individuellen Wechselbefehle auf einen neuen Organisationskanal erforderlich sein.

Diese Aufgabe wird durch die in den Ansprüchen 1 und gekennzeichneten Merkmale gelöst.

Durch das erfindungsgemäße Verfahren kann eine annähernd gleichmäßige Verteilung der Verkehrsmenge auf verschiedene Organisationskanäle einer Funkzone eines Funkübertragungssystems erreicht werden.

In einer Funkverbindung mit der ortsfesten Funkstation steht ein Teil der Vielzahl von beweglichen Funkstationen.

Beim bekannten Funkübertragungssystem (DE-AS 27 33 5D3) müssen im Falle eines Verbindungsaufbaus von ortsfester Funkstation zur beweglichen Funkstation diese auf allen Organisationskanälen der Funkzone gerufen werden. Diese unnötige Belastung aller Organisationskanäle kann durch das erfindungsgemäße Verfahren vermieden werden. Weiterhin kann die Zahl von Umbuchungen von beweglichen Funkstationen eines überlasteten Organisationskanals gering gehalten werden. Durch Verkehrsmessungen kann in der ortsfesten Funkstation die momentane Verkehrsmenge auf den verschiedenen Organisationskanälen bestimmt werden. Die im Funkübertragungssystem sowohl der ortsfesten Funkstation als auch der beweglichen Funkstation bekannte, variable Teilmengenanzahl ist so gewählt, daß in jeder Funkzone die verschiedenen Teilmengen möglichst gleich verteilt sind. Die Teilmengenanzahl (ntp) gibt an, in wieviele Teilmengen die Gesamtmenge der im Funkversorgungsgebiet der ortsfesten Funkstation befindlichen, beweglichen Funkstationen unterteilt ist. Durch die Verknüpfung von Teilmengenkennziffer und von über den Organisationskanal übertragenen Teilmengenanzahl und Teilmengenmarkierung kann die bewegliche Funkstation sich eindeutig einem Organisationskanal zuordnen. Die Teilmengenmarkierung (atp) in einem Organisationskanal gibt an, welche Teilmengen von beweglichen Funkstationen diesen benutzen dürfen. Mit deren Veränderung kann die ortsfeste Funkstation auf einfache Weise die Verteilung der Verkehrsmenge auf deren verschiedenen Organisationskanäle steuern.

Vorteilhafte Ausgestaltungen der Erfindung sind in den Unteransprüchen gekennzeichnet.

Die Erfindung wird im folgenden anhand eines in der Zeichnung dargestellten Ausführungsbeispiels näher beschrieben und erläutert. Es zeigen:

Fig. 1 für eine Teilmengenmarkierung und
Fig. 2 für eine weitere Teilmengenmarkierung die Verteilung von beweglichen Funkstationen MS auf Organisationskanäle CCH gemäß der Erfindung.

Fig. 3 eine erste Ausführungsform für eine Steuereinrichtung,

Fig. 4 eine Ausführungsform der Verknüpfungsschaltung der Steuereinrichtung nach Fig. 3 und

Fig. 5 eine weitere Ausführungsform für eine Steuereinrichtung gemäß der Erfindung.

Das Funkübertragungssystem ist in mehrere, aufeinander aufbauende Netzebenen gegliedert. Die unterste Ebene wird von sogenannten Funkzonen gebildet. Der Radius solcher Funkzonen liegt in Abhängigkeit von der Höhe der Antennenmasten von ortsfesten Funkstationen BS und bei einer Sendeleistung von maximal 50 Watt zwischen 5 und 15 km. Jede Funkzone wird von einer ortsfesten Funkstation BS versorgt. Diese kann Gespräche über sogenante Funkvermittlungseinrichtungen vom und zum öffentlichen Fernsprechnetz weiter vermitteln. Mehrere benachbarte Funkzonen können zu einem sogenannten Rufbereich zusammengefaßt werden. Auf der Festseite werden laufend die Aufenthaltsorte aller beweglichen Funkstationen MS erfaßt und in einem sogenannten Adressbuch gespeichert. Wechselt eine bewegliche Funkstation MS den Rufbereich, so erfolgt eine Änderung im Adressbuch.

Ein Gesprächswunsch eines Fernsprechteilnehmers eines öffentlichen Fernsprechnetzes zu einer beweglichen Funkstation MS führt zur Ausstrahlung eines Selektivrufs in allen Funkzonen jenes Rufbereichs, in dem die bewegliche Funkstation MS momentan erfaßt ist.

Das Sende- und Empfangsfrequenzband liegt beispielsweise zwischen 860 bis 960 MHz. Der Duplexabstand zwischen Sende- und Empfangsfrequenzband kann zu 45 MHz gewählt werden und Sende- und Empfangsfrequenzband können in ein Kanalraster von 25 KHz unterteilt werden. Die Kanälewerden im Duplexbetrieb betrieben.

Jeder Funkzone des Funkübertragungssystems sind je nach Verkehrsaufkommen eine Anzahl von Sprechkanälen und jeweils mindestens ein Organisationskanal CCH zugeordnet. Dabei werden in räumlich benachbarten Funkzonen unterschiedliche Frequenzen (Organisationskanäle) verwendet. Zur Unterscheidung von Organisationskanal CCH und Sprechkanal werden diese durch einen speziellen Code gekennzeichnet. Bei Ausfall bzw. Störung eines Organisationskanals CCH kann jeder Sprechkanal durch Wechsel des Codes die Aufgaben des Organisationskanals CCH übernehmen. Auf eine sonst aus Sicherheitsgründen erforderliche Duplizierung von Organisationskanälen CCH kann dadurch verzichtet werden.

Beim bekannten Funkübertragungssystem (DE-AS 27 33 503) sucht eine bewegliche Funkstation nach dem Einschalten mit Hilfe eines Orientierungssuchlaufs jenen Organisationskanal mit dem höchsten Signal/Geräusch-Verhältnis. Die Kanalnummer dieses Organisationskanals wird gespeichert und die bewegliche Funkstation geht in den Ruhezustand. Die bewegliche Funkstation überwacht den Störabstand dieses Organisationskanals. Sinkt der Störabstand des momentan gespeicherten Organisationskanals unter einem vorgebbaren Wert ab, so tastet die bewegliche Funkstation andere Organisationskanäle bei einem Suchlauf ab und vergleicht die Störabstände. Durch diesen Vergleich kann ein Funkzonenwechsel erkannt werden und die bewegliche Funkstation speichert die Kanalnummer des entsprechenden Organisationskanals. In einer Funkzone befinden sich demnach bewegliche Funkstationen, welche sende- und empfangsbereit oder welche momentan über den Organisationskanal CCH einen Verbindungsaufbau über ortsfeste Funkstationen und Funkvermittlungseinrichtungen ins öffentliche Fernsprechnetz oder zu einer beweglichen Funkstation des Funkübertragungssystem durchführen. Beim bekannten Funkübertragungssystem (DE-AS 27 33 503) speichert die bewegliche Funkstation jenen Organisationskanal, der das höchste Signal/Geräusch-Verhältnis aufweist. Dabei können, je nach Verkehrssituation, die Verkehrsmengen auf verschiedenen Organisationskanälen einer Funkzone unterschiedlich sein.

Eine annähernd gleichmäßige Verteilung der Verkehrsmenge auf verschiedene Organisationskanäle CCH wird dadurch erreicht, daß die ortsfeste Funkstation BS die Menge aller im Bereich der eigenen Funkzone befindlichen, beweglichen Funkstationen MS in eine variable Teilmengenanzahl ntp von Teilmengen TP unterteilt. Die Teilmengenanzahl ntp entspricht der Anzahl von Organisationskanälen CCH, welche von einer Funkvermittlungseinrichtung dieser ortsfesten Funkstation BS zugewiesen werden. Die ortsfeste Funkstation BS sendet auf den Organisationskanälen CCH die Teilmengenanzahl ntp und eine Teilmengenmarkierung atp zur beweglichen Funkstation MS. Die bewegliche Funkstation MS leitet durch Verknüpfung von Teilmengenanzahl ntp und der eigenen Kennung mid ein Kriterium mtp ab. Zur Ableitung des Kriteriums mtp können beispielsweise die letzten zwei Ziffern y z der Kennung mid verwendet werden. Die letzten zwei Ziffern y z der Kennung mid werden durch die Teilmengenanzahl ntp gemäß dem Algorithmus

$$mtp = (yz) \bmod (ntp)$$

geteilt. Bei Gleichheit von Kriterium mtp und Teilnehmermarkierung atp ordnet sich die bewegliche Funkstation MS diesem Organisationskanal CCH und speichert dessen Kanalnummer cnr. Jeder Teilmenge TP ist somit in eindeutiger Weise genau ein Organisationskanal CCH zugeordnet.

Bei einer Störung oder Ausfall eines Organisationskanals CCH einer Funkzone ist eine Neuverteilung der beweglichen Funkstationen MS auf die verbleibenden Organisationskanäle CCH erforderlich. Die ortsfeste Funkstation BS teilt über die ihr zugeordneten Organisationskanäle CCH in einer Kontrollmeldung CCI die Teilmengenanzahl ntp und die Teilmengenmarkierung atp mit.

Durch Änderung der Teilmengenmarkierung atp durch die ortsfeste Funkstation BS kann diese die Neuverteilung vornehmen. Sobald nämlich eine bewegliche Funkstation MS erkennt, daß die Bedingung

$$mtp = atp$$

für diese nicht mehr gilt, ermittelt diese, gemäß dem vorstehend beschriebenen Verfahren, das Kriterium mtp erneut. Die bewegliche Funkstation MS ordnet sich jenem Organisationskanal CCH zu, für den die Bedingung

$$mtp = atp$$

wieder erfüllt ist. Auf diesen neuen Organisationskanal CCH braucht sich die bewegliche Funkstation MS nicht umzubuchen, wenn dieser zum gleichen Rufbereich, wie der vorher benutzte Organisationskanal CCH, gehört.

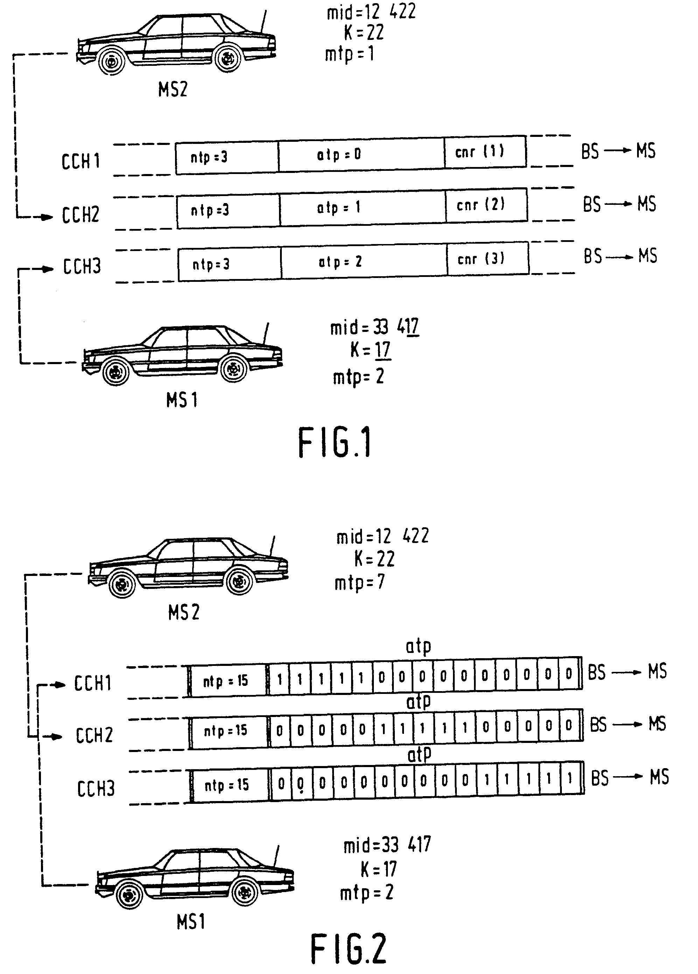

Im in der Fig. 1 dargestellten Ausführungsbeispiel hat die ortsfeste Funkstation BS die veränderbare Teilmengenanzahl

$$ntp = 3$$

gleich der Zahl n von Organisationskanälen CCH gewählt. Diese überträgt in den drei Organisationskanälen CCH1, CCH2 und CCH3 die Teilmengenanzahl ntp = 3. Im Organisationskanal CCH1 sendet die ortsfeste Funkstation BS die Teilmengenmarkierung atp = 0, im Organisationskanal CCH2 die Teilmengenmarkierung atp = 1 und im Organisationskanal CCH3 die Teilmengenmarkierung atp = 2. Diese ergeben sich als mögliche Reste der Division durch die Zahl 3.

Einer beweglichen Funkstation MS1 ist die Teilmengenkennziffer K = 17 zugeordnet. Diese Teilmengenkennziffer K Sind z.B. die letzten zwei Ziffern der Kennung mid. Die bewegliche Funkstation MS1 errechnet das Kriterium mtp, indem diese die Teilmengenkennziffer K durch die Teilmengenanzahl ntp, im dargestellten Ausführungsbeispiel ntp = 3, teilt. Der Rest der Division, also das Kriterium mtp, ist in diesem Fall die Zahl 2. Eine bewegliche Funkstation MS2 berechnet aus der Teilmengenkennziffer K = 22 das Kriterium mtp zu 1. Die beweglichen Funkstationen MS ordnen sich jenen Organisationskanälen CCH zu, für die das Kriterium mtp gleich der Teilmengenmarkierung ist. Im dargestellten Ausführungsbeispiel ordnet sich die bewegliche Funkstation MS1 somit dem Organisationskanal CCH3 und die bewegliche Funkstation MS2 dem Organisationskanal CCH2 zu. Die Kanalnummern cnr 3 bzw. cnr 2 des Organisationskanals CCH3 bzw. des Organisationskanals CCH2 werden in den beweglichen Funkstationen MS1 bzw. MS2 gespeichert.

Die Teilmengenkennziffer K und die Berechnungsvorschrift zur Ermittlung des Kriteriums mtp in der beweglichen Funkstation MS sind so zu wählen, daß in jeder Funkzone die Anzahl der verschiedenen Kriterien mtp möglichst gleich verteilt sind. Wird die Teilmengenanzahl ntp der ortsfesten Funkstation BS gleich der Zahl n von dieser zugeteilten Organisationskanälen CCH gewählt, so gestaltet sich die Zuordnung der Organisationskanäle CCH in den beweglichen Funkstationen MS einfach. Die ortsfeste Funkstation BS sendet auf jedem Organisationskanal CCH nur eine, von Organisationskanal CCH zu Organisationskanal CCH verschiedene Teilmengenmarkierung atp.

Wird als veränderbare Teilmengenanzahl ntp in der ortsfesten Funkstation BS z.B. ein ganzzahliges Vielfaches der Zahl n von Organisationskanälen CCH gewählt, so ist eine steuerbare Verteilung der Verkehrsmenge möglich. Auch bei einer Teilmengenmarkierung atp, welche ein bestimmtes Bitmuster darstellt, kann die Zuordnung in der ortsfesten Funkstation BS und in den beweglichen Funkstationen MS eindeutig sein. Beispielsweise ist nach Fig. 2 die Teilmengenmarkierung atp ein Wort mit sechzehn Bit. Die ortsfeste Funkstation BS mit einer Zahl n = 3 von Organisationskanälen CCH (Organisationskanäle CCH1, CCH2 und CCH3) wählt die Teilmengenanzahl ntp = 15. Diese Teilmengenanzahl ntp ist das kleinste Vielfache von drei (n = 3) mit kleiner, gleich sechzehn (atp hat sechzehn Bit). Die ortsfeste Funkstation sendet auf dem Organisationskanal CCH1 eine Teilmengenmarkierung atp = 11111 00000 00000, auf dem Organisationskanal CCH2 eine Teilmengenmarkierung atp = 00000 11111 00000 und auf dem Organisationskanal CCH3 eine Teilmengenmarkierung atp = 00000 00000 11111. Dem ersten Bit der Teilmarkierung atp ist das Kriterium mtp = 0, dem zweiten Bit das Kriterium mtp = 1 usw. und dem letzten Bit das Kriterium mtp = 15 zugeordnet.

Die beweglichen Funkstationen MS ordnen sich einem Organisationskanal CCH zu, wenn dieser an der, dem Kriterium mtp zugeordneten Bitstelle der Teilmengenmarkierung atp z.B. den Logisch-1-Kennzustand aufweist. Im Falle des in Fig. 2 dargestellten Ausführungsbeispiels weist die bewegliche Funkstation MSI das Kriterium mtp = 2 auf und ordnet sich dem Organisationskanal CCHI mit Logisch-1-Kennzustand an dritter Bitstelle zu. Die bewegliche Funkstation MS2 ordnet sich dem Organisationskanal CCH2 mit Logisch-1-Kennzustand an achter Bitstelle zu.

Für den Fall, daß jedem Organisationkanal CCH von der ortsfesten Funkstation BS eine zusammenhängende Gruppe von Teilmengen TP zugewiesen wird, kann die Zuordnung von Teilmengen TP aufgrund einer Teilmenoenmarkierung atp bestehend aus einer größten Ziffer ltp und einer kleinsten Ziffer ftp durchgeführt werden. Im folgenden wird angenommen, daß in der ortsfesten Funkstation BS die Zahl n = 2 (Organisationskanäle CCH1 und CCH2) und die Teilmengenanzahl ntp = 16 gewählt werden. Die ortsfeste Funkstation BS sendet auf dem Organisationskanal CCH1 eine Teilmengenmarkierung atp = 1111 1111 0000 0000 und auf dem Organisationskanal CCH2 eine Teilmengenmarkierung atp = 0000 0000 1111 1111. Die kleinste Ziffer ftp der Teilmengenmarkierung atp des Organisationskanals CCH1 ist somit null und die größte Ziffer ltp ist sieben (für Organisationskanal CCH2 ist ftp = 8 und ltp = 15).

Bewegliche Funkstationen MS ordnen sich einem Organisationskanal CCH zu, wenn die Bedingung

ftp ≤ mtp ≤ ltp

erfüllt ist. Die bewegliche Funkstation MS 1 mit der Teilmengenkennziffer K = 17 berechnet das Kriterium mtp = 1 und ordnet sich dem Organisationskanal CCH 1 zu. Die bewegliche Funkstation MS 2 mit Teilmengenkennziffer K = 22 berechnet das Kriterium mtp = 8 und ordnet sich dem Organisationskanal CCH 2 zu.

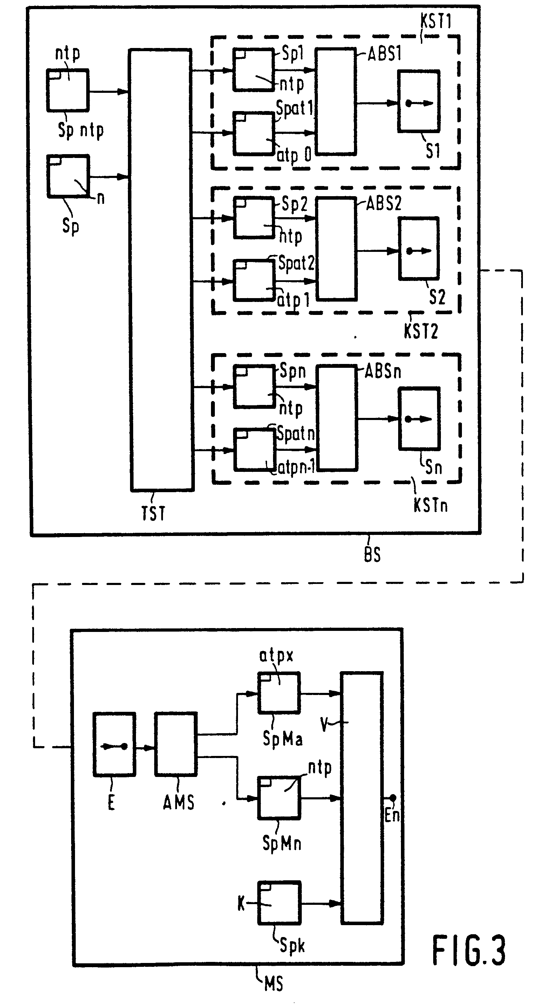

In Fig. 3 ist eine Steuereinrichtung in Blockschaltform dargestellt. Die ortsfeste Funkstation BS enthält Speicher Sp und Spntp, deren Ausgänge jeweils mit einem Eingang einer Teilmengensteuerung TST verbunden sind, und n Kanalsteuerungen KST 1 bis KSTn, entsprechend der Zahl n von zugeordneten Organisationskanälen CCH.

Jede Kanalsteuerung (beispielsweise KST 1) weist einen ersten Speicher Sp 1 und einen zweiten Speicher Spat 1 auf, deren Eingänge jeweils mit einem Ausgang der Teilmengensteuerung TST und deren Ausgänge jeweils mit einem Eingang einer Abfragesteuerung ABS 1 verbunden sind. Der Ausgang der Abfragesteuerung ABS 1 ist an den Eingang eines Senders S 1 angelegt.

In der beweglichen Funkstation MS sind ein Empfänger E mit Zwischenspeicher und eine Abfragesteuerung AMS angeordnet. Ein erster Ausgang der Abfragesteuerung AMS ist mit dem Eingang eines ersten Speichers SpMa verbunden, dessen Ausgang an einem Eingang einer Verknüpfungsschaltung V angeschlossen ist. Ein zweiter Ausgang der Abfragesteuerung AMS ist an den Eingang eines zweiten Speichers SpMn angelegt, dessen Ausgang mit einem Eingang der Verknüpfungsschaltung V verbunden ist. Die bewegliche Funkstation MS enthält weiterhin einen dritten Speicher SpK, dessen Ausgang an einen Eingang der Verknüpfungsschaltung V angelegt ist.

In der ortsfesten Funkstation BS wird im Speicher Sp die Zahl n gleich den der ortsfesten Station BS zugeordneten Organisationskanäle CCH und im Speicher Spntp die Teilmengenanzahl ntp abgespeichert. Die beiden Zahlen n und ntp werden der Teilmengensteuerung TST zugeführt, welche aus diesen für jeden Organisationskanal CCH eine Teilmengenmarkierung atp ableitet, welche im zweiten Speicher Spatm (m = 1, ... n) der zugehörigen Kanalsteuerung KSTm eingespeichert wird. In dem ersten Speicher Spm der zugehörigen Kanalsteuerung KSTm wird die Teilmengenzahl ntp abgespeichert. Mit Hilfe der Abfragesteuerung ABSm werden die beiden Zahlen ausgelesen und dem zugehörigen Sender Sm zugeführt.

In dem in der beweglichen Funkstation MS angeordneten Empränger E werden die gesendete Teilmengenmarkierung atp und die Teilmengenanzahl ntp empfangen und zwischengespeichert. Die Abfragesteuerung AMS liest diese zwischengespeicherten Zahlen aus und führt die Teilmengenmarkierung atp dem Speicher SpMa und die Teilmengenanzahl ntp dem 3peicher SpMn zu. Mit Hilfe der Verknüpfungsschaltung V werden die gespeicherte Teilmengenanzahl ntp und die gespeicherte Teilmengenmarkierung atp mit einer in dem dritten Speicher SpK gespeicherten Teilmengenkennziffer K verknüpft. An einer Klemme En der Verknüpfungsschaltung V ist ein Steuersignal zur Zuordnung der beweglichen Funkstation MS zu einem der Organisationskanäle CCH abgreifbar.

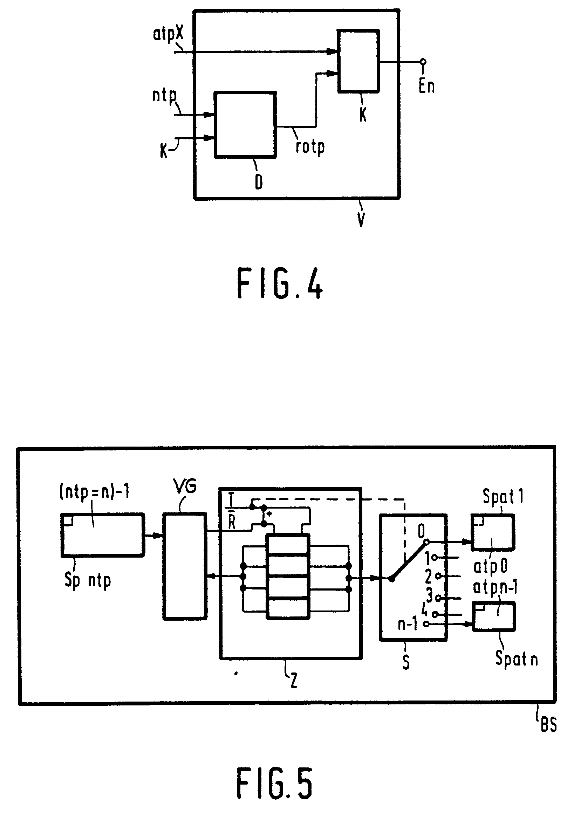

Die in der Fig. 4 gezeigte Verknüpfungsschaltung V enthält einen Komparator K und eine Divisionsschaltung D. In der Divisionsschaltung D werden die Teilmengenanzahl ntp und die Teilmengenkennziffer K zur Ableitung eines Kriteriums mtp durch Division von Teilmengenkennziffer K durch die Teilmengenanzahl ntp. Im Komparator K wird überprüft, ob die zugeführte Teilmengenmarkierung beispielsweise atpX gleich dem Kriterium mtp ist.

In der ortsfesten Funkstation 88 gemäß Fig. 5 ist im Speicher Spntp die um die Zahl 1 erniedrigte Teilmengenanzahl ntp, welche gleich einer Zahl n den der ortsfesten Funkstation BS zugeordneten Organisationskanäle CCH ist, abgespeichert. Der Speicher Spntp ist mit einer Vergleichsschaltung VG verbunden, deren weiterer Eingang an einem Zähler Z angeschlossen ist. Der Ausgang der Vergleichsschaltung VG ist mit dem Zähler Z verbunden und setzt diesen zurück, wenn die beiden Eingangssignale der Vergleichsschaltung VG gleich sind. Der Ausgang des Zählers Z ist an ein Schrittschaltwerk S angeschlossen, welches mit einem dem Takteingang des Zählers Z zugeführten Takt T fortgeschaltet wird. Jeder Ausgang 0,... (n - 1) des Schrittschaltwerks S ist mit einem Speicher Spatm (m = 1, ..., n) verbunden. Diese Speicher Spatm sind in jeder Kanalsteuerung (m = 1, ..., n) angeordnet und speichern die Teilmengenmarkierung atp (m - 1).

**Patentansprüche**

1. Verfahren zur Verteilung der Verkehrsmenge auf verschiedene Organisationskanäle (CCH) eines Funkübertragungssystems mit ortfesten Funkstationen (BS), welche in räumlicher Anordnung ein Zellularsystem mit Funkzonen bilden, mit mindestens einer ortsfesten Funkstation (BS) mit mindestens zwei Organisationskanälen (CCH) und mehreren Sprechkanälen und mit beweglichen Funkstationen (MS) und wobei die Menge der im Versorgungsgebiet des Funkübertragungssystems befindlichen, beweglichen Funkatstionen (MS) in eine anzahl von Teilmengen unterteilt ist, dadurch gekennzeichnet, daß die ortsfeste Funkstation (BS) die Menge der im Bereich der eigenen Funkzone befindlichen beweglichen Funkstationen (MS) mit einer veränderbaren Teilmengenanzahl (ntp) in Teilmengen (TP) unterteilt, daß die ortsfeste Funkstation (BS) auf jedem Organisationskanal (CCH) die Teilmengenanzahl (ntp) und eine Teilmengenmarkierung (atp) sendet, und daß die bewegliche Funkstation (MS) die empfangene Teilmengenanzehl (ntp) und die empfangene Teilmengenmarkierung (atp) mit einer gespeicherten Teilmengenkennziffer (K) verknüpft und in Abhängigkeit davon sich einem der Organisationskanäle (CCH) zuordnet.

. Verfahren nach Anspruch 1, dadurch gekennzeichnet, daß die Teilmengenkennziffer (K) Teil einer gespeicherten Kennung (mid) der beweglichen Funkstation (MS) ist.

3. Verfahren nach Anspruch 2, dadurch gekennzeichnet, daß die Teilmengenkennziffer (K) aus den letzten zwei Ziffern (yz) der Kennung (mid) der beweglichen Funkstation (MS) abgeleitet wird.

4. Verfahren nach Anspruch 1, dadurch gekennzeichnet, daß die ortsfeste Funkstation (BS) die Teilmengenanzahl (ntp) gleich einer Zahl (n) von dieser zugeordneten Organisationskanälen (CCH) wählt.

5. Verfahren nach Anspruch 1, dadurch gekennzeichnet, daß die ortsfeste Funkstation (BS) die Teilmengenanzahl (atp) größer einer Zahl (n) von zugeordneten Organisationskanälen (CCH) wählt.

6. Verfahren nach Anspruch 1, dadurch gekennzeichnet, daß die ortsfeste Funkstation (BS) über jeden Organisationskanal (CCH) als Teile der Teilmengenmarkierung (atp) eine größte und eine kleinste Ziffer (ltp und ftp) zur beweglichen Funkstation (MS) überträgt.

7. Verfahren nach Anspruch 1, dadurch gekennzeichnet, daß die bewegliche Funkstation (MS) aus der Verknüpfung von Teilmengenanzahl (ntp) mit der Teilmengenkennziffer (K) ein Kriterium (mtp) ableitet und daß in Abhängigkeit vom Kriterium (mtp) und Teilmengenmarkierung (atp) die bewegliche Funkstation (MS) sich einem der Organisationskanäle (CCH) zuordnet.

8. Verfahren nach Anspruch 1 und 7, dadurch gekennzeichnet, daß das Kriterium (mtp) der Rest der Division von Teilmengenkennziffer (K) durch die Teilmengenanzahl (ntp) ist.

9. Verfahren nach Anspruch 1 und 7, dadurch gekennzeichnet, daß die Teilmengenmarkierung (atp) gleich dem Kriterium (mtp) ist.

10. Verfahren nach Anspruch 1, dadurch gekennzeichnet, daß die Teilmengenmarkierung (atp) ein Bitmuster ist, wobei der einzelnen Bitstelle jeweils eine Teilmenge (TP) von beweglichen Funkstationen (MS) zugeordnet ist.

11. Steuereinrichtung zur Verteilung der Verkehrsmenge auf verschiedene Organisationskanäle (CCH) eines Funkübertragungssystems mit mindestens einer ortsfesten Funkstation (BS) mit mindestens zwei Organisationskanälen (CCH) und mehreren Sprechkanälen und mit beweglichen Funkstationen (MS), dadurch gekennzeichnet, daß in der ortsfesten Funkstation (BS) ein Speicher (Sp) vorhanden ist, in welchem eine Zahl (n) gleich den der ortsfesten Funkstation (BS) zugeordneten Organisationskanälen (CCH) abgespeichert ist, daß in der ortsfesten Funkstation (BS) ein Speicher (Spntp) vorgesehen ist, welcher die Teilmengenanzahl (ntp) speichert, daß eine mit den beiden Speichern (Sp, Spntp) verbundene Teilmengensteuerung (TST) aus der gespeicherten Teilmengenanzahl (ntp) und der Zahl (n) der zugeordneten Organisationskanäle (CCH) für jeden Organisationskanal (CCH) eine Teilmengenmarkierung (atp) ableitet, daß die Teilmengensteuerung (TST) die Teilmengenanzahl (ntp) und die Teilmengenmarkierung (atp) einer Anzahl (n) von Kanalsteuerungen (z.B. KST1) zuführt, daß jede Kanalsteuerung (z.B. KST1) einen ersten Speicher (Sp1) zur Speicherung der Teilmengenanzahl (ntp) und einen zweiten Speicher (Spat1) zur Speicherung der Teilmengenmarkierung (z.B. atp0) aufweist, wobei mit dem ersten Speicher (Spat1) eine Abfragesteuerung (z.B. ABS1) verbunden ist und die Abfragesteuerung (ABS1) die gespeicherte Teilmengenmarkierung (z.B. atp0) und die Teilmengenanzahl (ntp) ausliest und einem in der ortsfesten Funkstation (BS) angeordneten Sender (z.B. S1) zuführt, daß ein in der beweglichen Funkstation (MS) angeordneter Empfänger (E) die gesendete Teilmengenmarkierung (z.B. atp0) und die Teilmengenanzahl (ntp) empfängt und zwischenspeichert, daß eine Abfragesteuerung (AMS) die zwischengespeicherte Teilmengenmarkierung (z.B. atp0) und Teilmengenanzahl (ntp) einem ersten Speicher (SpMa) und einem zweiten Speicher (SpMn) zuführt, daß eine in der beweglichen Funkstation (MS) angeordnete Verknüpfungsschaltung (V) die gespeicherte Teilmengenmarkierung (z.a. atp0) und die gespeicherte Teilmengenanzahl (ntp) mit einer in einem dritten Speicher (SpK) gespeicherten Teilmengenkennziffer (K) verknüpft und daß an einer Klemme (En) der Verknüpfungsschaltung (V) ein Steuersignal zur Zuordnung der beweglichen Funkstation (MS) zu einem der Organisationskanäle (CCH) abgreifbar ist.

12. Steuereinrichtung nach Anspruch 11, dadurch gekennzeichnet, daß die Verknüpfungsschaltung (V) einen Komparator (K) und eine Divisionsschaltung (D) aufweist, daß in der Divisionsschaltung (D) die Teilmengenanzahl (ntp) und die Teilmengenkennziffer (K) zur Ableitung eines Kriteriums (mtp) durch Division miteinander verknüpft werden, wobei das Kriterium (mtp) der Rest der Division von Teilmengenkennziffer (K) durch die Teilmengenanzahl (ntp) ist und daß im Komparator (K) überprüft wird, ob die zugeführte Teilmengenmarkierung (atpX) gleich dem Kriterium (mtp) ist.

13. Steuereinrichtung zur Durchführung des Verfahrens nach Anspruch 4, dadurch gekennzeichnet, daß in der ortsfesten Funkstation (BS) in einem Speicher (Spntp) die um die Zahl 1 erniedrigte Teilmengenanzahl (ntp), welche gleich einer Zahl (n) der der ortsfesten Funkstation (BS) zugeordneten Organisationskanälen (CCH) ist, abgespeichert ist, daß der Speicher (Spntp) mit einer Vergleichsschaltung (VG) verbunden ist, welche an ihrem weiteren Eingang mit einem Zähler (Z) verbunden ist, daß der Ausgang der Vergleichsschaltung (VG) mit dem Zähler (Z) verbunden ist und diesen rücksetzt, wenn die beiden Eingangssignale gleich sind und daß der Ausgang des Zählers (Z) mit einem Schrittschaltwerk (S) verbunden ist, welches mit einem, dem Takteingang des Zählers (Z) zugeführten Takt (T) fortgeschaltet wird, wobei mit jedem Ausgang des Schrittschaltwerks (S) ein in Kanalsteuerungen (z.B. KST1) angeordneter Speicher (z.B. Spat1) zur Speicherung der Teilmengenmarkierung (z.B. atp0) verbunden ist.

## Claims

1. A method of distributing the traffic load over different control channels (CCH) of a radio transmission system with base stations (BS), which in a spatial arrangement form a cellular system with radio zones, at least one base station (BS) with at least two control channels (CCH) and a plurality of speech channels and with mobile stations (MS), the number of mobile stations (MS) in the service area of the radio transmission system being divided into a number of groups, characterized in that the base station (BS) divides the number of mobile stations (MS) located within the area of its own radio zone into groups (TP) having a variable number of groups (ntp), that the base station (BS) transmits through each control channel (CCH) the number of groups (ntp) and a group code (atp), and that the mobile station (MS) combines the received number of groups (ntp) and the received group code (atp) with a stored group code number (K) and accordingly assigns itself to one of the control channels (CCH).

2. A method as claimed in Claim 1, characterized in that the group code number (K) is part of a stored identification code (mid) of the mobile station (MS).

3. A method as claimed in Claim 2, characterized in that the group code number (K) is derived from the last two digits (yz) of the identification code (mid) of the mobile station (MS).

4. A method as claimed in Claim 1, characterized in that the base station (BS) chooses the number of groups (ntp) to be equal to the number (n) of control channels (CCH) allocated to it.

5. A method as claimed in Claim 1, characterized in that the base station (BS) chooses the number of groups (atp) to be larger than a number (n) of assigned control channels (CCH).

6. A method as claimed in Claim 1, characterized in that the base station (BS) transmits over each control channel (CCH) to the mobile station (MS) a largest and a smallest digit (ltp and ftp) as parts of the group code (atp).

7. A method as claimed in Claim 1, characterized in that the mobile station (MS) derives a criterion (mtp) from the combination of the number of groups (ntp) with the group code number (K) and that the mobile station (MS) assigns itself to one of the control channels (CCH) in accordance with the criterion (mtp) and group code (atp).

8. A method as claimed in Claims 1 and 7, characterized in that the criterion (mtp) is the remainder of the division of the group code number (K) by the number of groups ( ntp).

9. A method as claimed in Claims 1 and 7, characterized in that the group code (atp) is identical to the criterion (mtp).

10. A method as claimed in Claim 1, characterized in that the group code (atp) is a bit pattern, a group (Tp) of mobile stations (MS) being assigned to each bit location.

11. A control arrangement for distributing the traffic load over various control channels (CCH) of a radio transmission system with at least one base station (BS) having at least two control channels (CCH) and various speech channels and with mobile stations (MS), characterized in that the base station (BS) comprises a memory (Sp) in which a number (n) equal to the number of control channels (CCH) assigned to the base station is stored, that the base station (BS) comprises a memory (Spntp) storing the number of groups (ntp), that a group control (TST) connected to the two memories (Sp, Spntp) derives a group code (atp) for each control channel (CCH) from the stored number of groups (ntp) and the number (n) of assigned control channels (CCH), that the group control (TST) supplies the number of groups (ntp) and the group code (atp) of a number (n) of channel controls (for example KST 1), that each channel control (for example KST 1) has a first memory (Sp1) to store the number of groups (ntp) and a second memory ( Spat1) to store the group code (for example atp0), an interrogation control (for example ABS 1) being connected to the first memory ( Spat1) and this interrogation control (ABS 1) reading the stored group code (for example atp0) and the number of groups (ntp) andapplying it to a transmitter ( for example S 1) comprised in the base station (BS), that a receiver (E) comprised in the mobile station (MS) receives and intermediately stores the transmitted group code (for example atp0) and the number of groups (ntp), that an interrogation control (AMS) applies the intermediately stored group code (for example atp0) and the number of groups (ntp) to a first memory (SpMa) and a second memory (SpMn), that a logic combining circuit (V) comprised in the mobile station (MS) combines the stored group code (for example atp0) and the stored number of groups (ntp) with a group code number (K) stored in a third memory (SpK) and that a control signal for assigning a mobile station (MS) to one of the control channels ( CCH) can be taken from a terminal (En) of the logic combining circuit (V).

12. A control arrangement as claimed in Claim 11, characterized in that the logic combining circuit (V) includes a comparator (K) and a divider circuit (D) in which the number of groups (ntp) and the group code number (K) are combined by division so as to derive a criterion (mtp) which is the remainder of the division of the group code number (K) by the number of groups (ntp) and that in the comparator (K) it is checked whether the supplied group code (atpX) is identical to the criterion (mtp).

13. A control arrangement for carrying out the method as claimed in Claim 4, characterized in that in a memory (Spntp) in the base station (BS) the number of groups (ntp) reduced by one is stored, which is equal to a number (n) of the control channels (CCH) assigned to the base station (BS), that the memory (Spntp) is connected to a comparator circuit (VG) whose remote input is connected to a counter (Z), that the output of the comparator circuit (VG) is connected to the counter, resetting same when the two input signals are equal and that the output of the counter (Z) is connected to a stepping switch (S), which is switched by a clock pulse (T) applied to the clock pulse input of the counter (Z), each output of the stepping switch (S) being connected to a memory ( for example Spat1) arranged in the channel control means (for example KST1) to store the group code (for example atp0).

## Revendications

1.- Procédé pour répartir le volume de trafic sur divers canaux de service (CCH) d'un système de radiocommunications comportant des postes de radio fixes (BS) qui sont agencés dans l'espace de manière à former un système cellulaire à zones radio, au moins un poste de radio fixe (BS) comportant au moins deux canaux de service (CCH) et plusieurs canaux de conversation et des postes de radio mobiles (MS), la quantité des postes de radio mobiles (MS) se trouvant dans le domaine de couverture du système de radiocommunications étant répartie en un certain nombre de quantités partielles, caractérisé en ce que le poste de radio fixe (BS) répartit la quantité des postes de radio mobiles (MS) se trouvant dans le domaine de sa propre zone radio avec un nombre de quantités partielles variable (ntp) en des quantités partielles (TP), que le poste de radio fixe (BS) émet sur chaque canal de service (CCH), le nombre de quantités partielles (ntp) ainsi qu'un marquage de quantité partielle (atp) et que le poste de radio mobile (MS) combine le nombre de quantités partielles (ntp) reçu et le marquage de quantité partielle (atp) recu avec un chiffre caractéristique de quantité partielle (K) stocké et s'attribue, en fonction de cette combinaison, un des canaux de service (CCH).

2.- Procédé suivant la revendication 1, caractérisé en ce que le chiffre caractéristique de quantité partielle (K) fait partie d'une identification (mid) stockée du poste de radio mobile (MS).

3.- Procédé suivant la revendication 2, caractérisé en ce que le chiffre caractéristique de quantité partielle (K) est dérivé des deux derniers chiffres (yz) de l'identification (mid) du poste de radio mobile (MS).

4.- Procédé suivant la revendication 1, caractérisé en ce que le poste de radio fixe (BS) choisit le nombre de quantités partielles (ntp) égal à un nombre n de canaux de service (CCH) qui y sont associés.

5.- Procédé suivant la revendication 1, caractérisé en ce que le poste de radio fixe (BS) choisit le nombre de quantités partielles (ntp) supérieur à un nombre (n) de canaux de service (CCH) associé.

6.- Procédé suivant la revendication 1, caractérisé en ce que le poste de radio fixe (BS) transmet par l'intermédiaide de chaque canal de service (CCH), à titre de parties du marquage de quantité partielle (atp), un plus grand et un plus petit chiffre (ltp et ftp), au poste de radio mobile (MS).

7.- Procédé suivant la revendication 1, caractérisé en ce que le poste de radio mobile (MS) déduit de la combinaison du nombre de quantités partielles (ntp) et du chiffre caractéristique de quantité partielle (K), un critère (mtp) et, qu'en fonction du critère (mtp) et du marquage de quantité partielle (atp), le poste de radio mobile (MS) s'attribue un des canaux de service (CCH).

8.- Procédé suivant les revendications 1 et 7, caractérisé en ce que le critère (mtp) est le reste de la division du chiffre caractéristique de quantité partielle (K) par le nombre de quantités partielles (ntp).

9.- Procédé suivant les revendications 1 et 7, caractérisé en ce que le marquage de quantité partielle (atp) est égal au critère (mtp).

10.- Procédé suivant la revendication 1, caractérisé en ce que le marquage de quantité partielle (atp) est un échantillon de bits, une quantité partielle (TP) de postes de radio mobiles (MS) étant chaque fois attribuée aux emplacements de bits individuels.

11.- Dispositif de commande pour répartir le volume de trafic sur divers canaux de service (CCH) d'un système de radiocommunications comportant au moins un poste de radio fixe (BS) présentant au moins deux canaux de service (CCH) et plusieurs canaux de conversation et des postes de radio mobiles (MS), caractérisé en ce que dans le poste de radio fixe (BS) est prévue une mémoire (Sp) dans laquelle un nombre (n) égal aux canaux de service (CCH) associés au poste de radio fixe (BS) est stocké, que dans le poste de radio fixe (BS) est prévue une mémoire (Spntp) qui stocke le nombre de quantités partielles (ntp), qu'un dispositif de commande de quantités partielles (TST) relié aux deux mémoires (Sp, Spntp) dérive un marquage de quantité partielle (atp) pour chaque canal de service (CCH) à partir du nombre de quantités partielles (ntp) stocké et du nombre (n) des canaux de service (CCH) associés, que le dispositif de commande de quantités partielles (TST) fournit le nombre de quantités partielles (ntp) et le marquage de quantité partielle (atp) à un nombre (n) de dispositifs de commande de canaux (par exemple KST 1), chaque dispositif de commande de canal (par exemple KST 1) comporte une première mémoire (Sp 1) pour stocker le nombre de quantités partielles (ntp) et une seconde mémoire (Spat1) pour stocker le marquage de quantité partielle (par exemple apt0), un dispositif de commande d'interrogation (par exemple ABS1) étant relié à la première mémoire (Spat 1) et le dispositif de commande d'interrogation lisant le marquage de quantité partielle (par exemple atp0) stocké et l'appliquant à un emetteur (par exemple S1) monté dans le poste de radio fixe (BS), qu'un récepteur (E) monté dans le poste de radio mobile (MS) reçoit le marquage de quantité partielle (par exemple atp0) émis et le nombre de quantités partielles (ntp) et les soumet au stockage intermédiaire, qu'un dispositif de commande d'interrogation (AMS) applique le marquage de quantité partielle (par exemple atp0) et le nombre de quantités partielles (ntp) à une première mémoire (SpMa) et à une seconde mémoire (SpMn), qu'un circuit logique (V) installé dans le poste de radio mobile (MS) combine le marquage de quantité partielle (par exemple atp0) stocké et le nombre de quantités partielles (ntp) stocké avec un chiffre caractéristique de quantité partielle (K) stocké dans une troisième mémoire (SpK) et que sur une borne (En) du circuit de combinaison (V) peut être prélevé un signal de commande pour attribuer le poste de radio mobile (MS) à un des canaux de service (CCH).

12.- Dispositif de commande suivant la revendication 11, caractérisé en ce que le circuit logique (V) comporte un comparateur (K) et un circuit de division (D), que dans le circuit de division (D), le nombre de quantités partielles (ntp) et le chiffre caractéristique de quantité partielle (K) sont combinés pour déduire un critère (mtp) par division, le critère (mtp) étant le reste de la division du chiffre caractéristique de quantité partielle (K) par le nombre de quantités partielles (ntp), et que dans le comparateur (K), il est vérifié si le marquage de quantité partielle (atpX) appliqué est égal au critère (mtp).

13.- Dispositif de commande pour l'exécution du procédé suivant la revendication 4, caractérisé en ce que dans le poste de radio fixe (BS), le nombre de quantités partielles (ntp) qui est égal à un nombre (n) des canaux de service (CCH) attribués au poste de radio fixe (BS), diminué d'une unité, est stocké dans une mémoire (Spnpt), que la mémoire (Spntp) est connectée à un circuit de comparaison (VG) qui est connecté par son autre entrée à un compteur (Z), que la sortie du circuit de comparaison (VG) est connectée au compteur (Z) et le ramène dans son état initial lorsque les deux signaux d'entrée sont égaux et que la sortie du compteur (Z) est connectée à un dispositif de commutation pas à pas (S) qui progresse à une cadence (Z) qui lui est fournie par l'entrée d'horloge du compteur (Z), une mémoire (par exemple Spat1) installée dans des dispositifs de commande de canaux (par exemple KST1) étant connectée à chaque sortie du dispositif de commutation pas à pas (S) afin de stocker les marquages de quantités partielles (par exemple atp0).

mid=12 422
K =22
mtp=1

MS2

| CCH1 | ntp =3 | atp = 0 | cnr (1) | BS → MS |
| CCH2 | ntp =3 | atp = 1 | cnr (2) | BS → MS |
| CCH3 | ntp =3 | atp = 2 | cnr (3) | BS → MS |

mid= 33 417
K = 17
mtp= 2

MS1

## FIG.1

mid=12 422
K =22
mtp=7

MS 2

atp

| CCH1 | ntp = 15 | 1 1 1 1 1 0 0 0 0 0 0 0 0 0 0 | BS → MS |
| CCH2 | ntp = 15 | 0 0 0 0 0 1 1 1 1 1 0 0 0 0 0 | BS → MS |
| CCH3 | ntp = 15 | 0 0 0 0 0 0 0 0 0 0 1 1 1 1 1 | BS → MS |

mid=33 417
K = 17
mtp= 2

MS1

## FIG.2

FIG.3

FIG.4

FIG.5